# EUROPÄISCHE PATENTANMELDUNG

(11) **EP 1 118 923 A1**
(43) Veröffentlichungstag der Anmeldung: **25.07.2001**
(21) Anmeldenummer: 00100922.4
(22) Anmeldetag: 18.01.2000
(51) Int. Cl.: G06F 1/00, G06F 17/60

(54) **Verfahren zur Nutzung von SW-Produkten, die über ein Netz angeboten werden**

(71) Anmelder: SIEMENS AKTIENGESELLSCHAFT, 80333 München (DE)
(72) Erfinder: Lautenbacher, Markus Eduard, Dr.rer.nat., 82487 Oberammergau (DE)

(57) **Zusammenfassung**

Gemäß der Erfindung wird es ermöglicht, daß ein Netzwerk-Provider die Behandlung für die Nutzung von Software-Produkten, die über ein Netz angeboten werden, übernehmen kann. Der Netzwerk-Provider kann diese Behandlung als Dienstleistung für den Anbieter von Software-Produkten anbieten, der diese Aufgaben outsourcen möchte, um sich auf seine Kernkompetenz (Erstellung der SW-Produkte) konzentrieren zu können.

## Beschreibung

### 1 . Technisches Problem

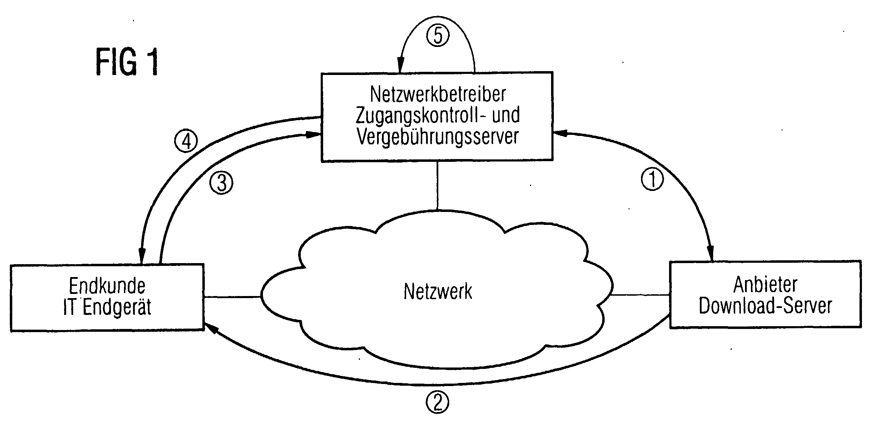

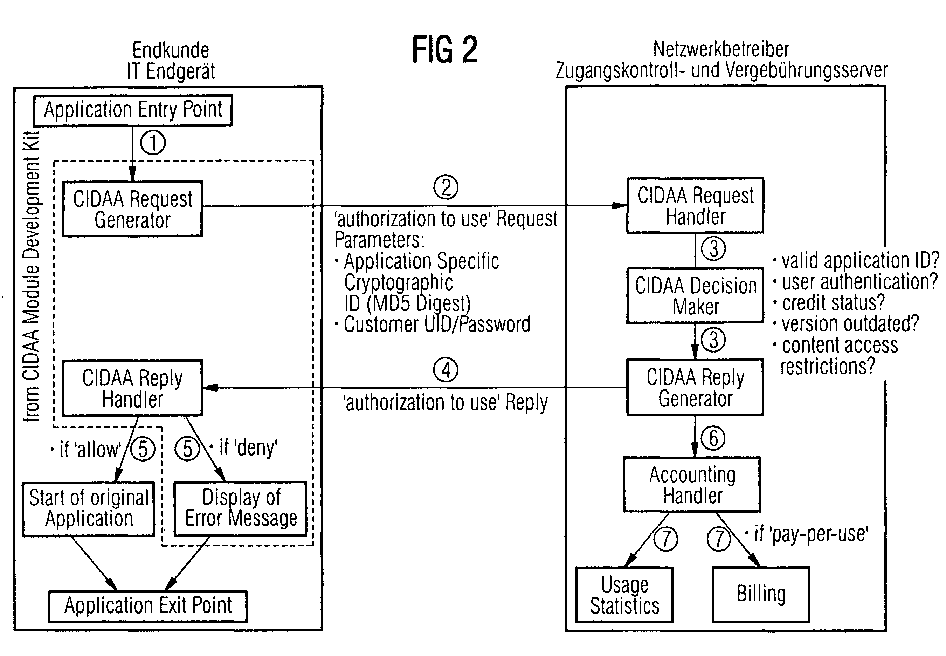

In modernen Netzwerken (wie z.B. dem Internet), in denen Software-Produkte zum Kauf bzw. als Dienstleistung angeboten werden, spielen im allgemeinen Fall drei verschiedene Beteiligte eine Rolle (siehe Fig. 1) :
- Netzwerkbetreiber:
   Der Netzwerkbetreiber (network operator, network provider) betreibt und verwaltet ein Netzwerk, das primär die Funktionalität "Bit-Transport" liefert.
   Der Netzwerkbetreiber stellt dem Anbieter von Software und Inhalten Network Connectivity für dessen Webserver zur Verfügung bzw. übernimmt diese Funktion stellvertretend im Sinne des Web Hosting, d.h er stellt für den Anbieter auch einen Webserver zur Verfügung.
   Der Netzwerkbetreiber stellt dem Endkunden ebenfalls Network Connectivity zur Verfügung, üblicherweise als Einwahl via Modem oder ISDN. Der Netzwerkbetreiber verfügt daher über eine etablierte und längerfristige Geschäftsbeziehung zum Endkunden: Er schick diesem in regelmäßigen Abständen Rechnungen über bezogenen Network Connectiviy Leistungen und kennt dessen Finanzgebahren.
- Anbieter von Software-Produkten:
   Der Anbieter hat seine Kernkompetenz in der Erstellung von Software-Produkten, wobei hier insbesondere aktionsorientierte Software-Produkte (z.B. Applikationen (z.B. Dienste, Tools, ... ), Spiele,...), im folgenden kurz als "Software" bezeichnet und inhaltsorienterte Software-Produkte (Studien, branchenspezifische Nachrichten,...), im folgenden kurz als "Inhalte" bezeichnet, zu nennen sind. Er vertreibt diese Software und/oder Inhalte durch Bereitstellung auf einem Webserver zum Download durch den Endkunden. Die hierfür für den Endkunden anfallenden Gebühren können sich je nach Vergebührungsmodell u.U. im Bereich von Kleinstbeträgen bewegen.
   Der Anbieter verfügt aufgrund der statistischen Natur des Web Surfings über keine etablierte und längerfristige Geschäftsbeziehung zum Endkunden. Weiterhin liegt seine Kernkompetenz nicht in der Vergebührung; insbesondere bei der Vergebührung von Kleinstbeträgen und dem damit verbundenen Buchungsaufwand stellt sich für ihn die Frage nach der Wirtschaftlichkeit.
- Endkunde:
   Der Endkunde springt in der Regel (z.B. Suchmaschinengetrieben) statistisch von Website zu Website. Er verfügt über keine bzw. will keine etablierte und längerfristige Geschäftsbeziehung zu den zahlreichen besuchten Anbietern von Software und Inhalten eingehen. Er will vielmehr die angebotenen Leistungen on-demand beziehen und die zugehörige Vergebührung möglichst auf einer Rechnung durch eine ihm bekannte Instanz erhalten. Die einzige, im vorliegenden Szenario garantiert vorhandene derartige Instanz ist der Netzwerkbetreiber, der dem Endkunden bereits Network Connectivity zur Verfügung und in Rechnung stellt.

Wünschenswert für alle Beteiligen in vorstehend erläutertem Szenario ist daher eine technische Lösung, die eine bequeme und wirtschaftliche Vergebührung für die Nutzung von Software und Inhalten in Netzwerken erlaubt.

Dabei sollen unterschiedliche Vergebührungsmodelle (inklusive Kleinstbeträge) möglich sein. Ebenso soll ein benutzerspezifischer Grad der Zugangskontrolle (z.B. für Minderjährige, Kinder) zu Software und Inhalten möglich sein. Zur Sicherung einer breiten Akzeptanz soll der für das Verfahren nötige Installations- und Konfigurations-aufwand auf Endkundenseite vernachlässigbar, auf Seiten des Anbieters wirtschaftlich und technisch vertretbar sein.

### 2. Bisherige Lösung

Die bisherige Lösung besteht in der Bereitstellung der unmodifizieten Software bzw. von Inhalten auf Webservern. Der Endkunde lädt diese von dort auf sein persönliches Endgerät herunter, installiert sie dort und benutzt die entsprechende Software bzw. die Inhalte.

Dabei sind hinsichtlich Zugangskontrolle (mögliche Kriterien: Art des Inhalts, Bezahlung der bezogenen Leistungen,...) folgende Modelle denkbar und wünschenswert, aber nicht immer möglich:
- Time-Limited-Free-Trial:
   Der Endkunde kann die Software oder Inhalte nach Installation auf seinem Endgerät für eine zeitlich beschränkte Dauer unentgeltlich nutzen.
   Derzeit wird die Gültigkeitsdauer lokal auf dem Endgerät durch z.B. Datumsabfrage bzw. Abfrage der Windows-Registry ermittelt und kann daher sehr leicht geknackt werden.
- Content-Based Access Control:
   Die Zugangskontrolle für die Nutzung der heruntergeladenen Software oder Inhalte bezogen auf ein vorgegebenes, Endkunden-spezifisches Profil ist derzeitigen technischen Lösungen nicht möglich, solange die Kontrollinstanz allein auf dem Gerät des Endkunden liegt.

Hinsichtlich Vergebührung sind folgende Modelle wünschenswert, aber derzeit nicht immer möglich:
- Pay-Per-Use:
   Die Vergebührung (i.a. von Kleinstbeträgen) entsprechend der tatsächlichen Nutzungshäufigkeit der Software oder Inhalte ist derzeit nicht möglich.
- One-Time-Full-Buy:
   Die einmalige Registrierung und Bezahlung einer Vollversion zur uneingeschränkten Nutzung der Software oder Inhalte erfolgt off-line via Telefon/Fax und einer zugehörige Kreditkartentransaktion. Dies ist die einzige derzeit funktionierende Vergebührungsmethode.
   Fehlen wenigstens lokale Schutzmechanismen zur Zugangskontrolle in der Software und Inhalten, so ist hierbei der Anteil der illegalen, unbezahlten Nutzung durch nicht registrierte Endkunden erheblich. Ohne Zugangskontrolle ist der wirtschaftliche Schaden für den Anbieter in diesem Vergebührungsmodell entsprechend hoch.

### 3. Erfindung

Im folgenden wird die Erfindung anhand der Zeichnung näher erläutert, wobei die Zeichnung sieben Figuren umfaßt.

Gemäß der Erfindung übernimmt ein Dienst-Provider, hier z.B. der Netzwerkbetreiber, die Nutzungsbehandlung, z.B. die "Vergebührung und/oder Zugangskontrolle" für die Nutzung von Software und Inhalten. Der Netzwerkbetreiber bietet dies als Dienstleistung für den Anbieter von Software und Inhalten an, der diese Aufgaben outsourcen möchte, um sich auf seine Kernkompetenz (Erstellung von Software und Inhalten) konzentrieren zu können. Über Outsourcing kann der Anbieter von Software und Inhalten auch die unter Umständen für ihn nicht wirtschaftliche Vergebührung von Kleinstbeträgen vermeiden. Das Anbieten der Nutzungsbehandlung, z.B. Vergebührung und/oder Zugangskontrolle, ist für den Netzwerkbetreiber besonders vorteilhaft, da der Endkunde ohnehin zum Zwecke der Network Connectivity an das Netz des Netzwerkbetreibers angeschlossen ist und mit diesem somit in einer längerfristigen Geschäftbeziehung steht. Die Tatsache, dass das Gerät des Endkunden, auf dem die Software und Inhalte genutzt werden sollen, am Netzwerk angeschlosen ist, ermöglicht eine verbesserte Zugangskontrolle zu Software und Inhalten durch den Netzwerkbetreiber als dritte Instanz, die sowohl gegenüber Endkunden als auch Anbieter unabhängig ist. Die Existenz einer Geschäftsbeziehung ermöglicht die In-casso Vergebührung von durch den Endkunden bei Dritten im Netzwerk bezogenen Leistungen stellvertretend durch den Netzwerkbetreiber.

Technisch realisiert wird die netzgestützte Zugangskontrolle und Vergebührung durch das Einfügen eines entsprechende Softwaremoduls in den ursprüngliche Source Code der Software und Inhalte durch den Anbieter. Dieses Softwaremodul stellt der Netzwerkbetreiber dem Anbieter von Software und Inhalten in Form eines Software Development Kits zur Verfügung wenn dieser sich für den Service "Netzwerkgestützte Zugangskontrolle und Vergebührung von Software und Inhalten" beim Netzwerkbetreiber subskribiert. Der Netzwerkbetreiber übernimmt die entsprechende zertifikatgestützte Validierung und Vergebührung der so modifizierten Software und Inhalte als zentrale und zertifizierte Instanz im Netz.

Die entsprechenden Schritte sind in Fig. 1 für den Fall der Dienstleistung "Vergebührung und Zugangskontrolle" schematisch dargestellt:
1. Der Hersteller von Software und Inhalten subskribiert sich beim Netzwerkbetreiber für den Dienst "Netzwerkgestützte Zugangskontrolle und Vergebührung von Software und Inhalten". Er erhält dazu vom Netzwerkbetreiber einen Software Development Kit, mit dessen Hilfe er in den Source Code seiner Software bzw. in die Inhalte eine Software-Komponente einbauen kann, die eine netzwerkgestützte Zugangskontrolle und Vergebührung realisiert. Die genannte Software wird im folgenden auch als "Dienst-Modul" oder "Zugangskontroll- und Vergebührungsmodul" bezeichnet.
2. Der Hersteller oder ein entsprechender Dienst-Provider stellt die mittels des o.g. Software Development Kits entsprechend gesicherte Software und Inhalte auf einem beliebigen Webserver im Netzwerk zum Download bereit. Der Endkunde lädt sich die Software und Inhalte von dort auf sein Endgerät herunter und installiert sie auf diesem.
3. Beim Aufruf der Software und Inhalte nimmt unmittelbar nach deren Start das über den Software Development Kit eingebrachte Dienst-Modul zum Zwecke der Zugangskontrolle und Vergebührung über das Netzwerk Kontakt auf mit dem entsprechenden Server des Netzwerkbetreibers. Dieser Kontakt zwischen Modul u. Server über das Netzwerk setzt eine sog. always-on Netzverbindung oder zumindest ein ausreichend schnelles dial-up-on-demand Verfahren seitens des Endkunden voraus. Zum Zwecke der Zugangskontrolle und Vergebührung werden dabei Daten wie Kryptographische Kennung (eineindeutige Identifikationsnummer, gültiges Vergebührungsmodell) der Software und Inhalte, Benutzerdaten (Benutzerkennung, Passwort, Accountnummer) zum Netzwerkbetreiber hin übertragen.
4. Der Netzwerkbetreiber überprüft die vom Endkunden eingegangen Daten auf ihre Korrektheit, Aktualität und die Verträglichkeit mit dem vom Kunden voreingestellten Profil. Bei dieser Überprüfung der Anforderung des Endkunden, bestimmte Software oder Inhalte benutzen zu wollen, können auf dem Server des Netzbetreibers z.B. folgende Informationen mit berücksichtigt werden: Kryptographische Kennung und Versionsnummer der Software und Inhalte, Art der zu benutzten Software und Inhalte bezogen auf ein voreingestelltes Benutzerprofil (z.B. Altersbeschränkung,Beschränkung auf bestimmte Inhalte, ...) des Endkunden, Bonität und Kontostand des Endkunden.Eine derartig feinabgestimmte Überprüfung wäre allein lokal auf dem Gerät des Endkunden überhaupt nicht oder zumindest nicht sicher durchzuführen.
   Am Ende der Überprüfung wird dem entsprechenden Zugangskontroll- und Vergebührungsmodul auf der Seite des Endkunden über die Netzwerkverbindung durch den Server des Netzwerkbetreibers zurückgemeldet, ob die Software und Inhalte vom Endkunden benutzt werden dürfen: Falls ja, setzt die Software und Inhalte ihre normale Funktionsweise fort; falls nein, terminiert das Zugangskontroll- und Vergebührungsmodul die Software und Inhalte mit einer Fehlermeldung und verhindert so deren unberechtigte Nutzung durch den Endkunden.
5. Falls die Anforderung des Endkunden vom Server positiv beantwortet wurde, werden anschließend die entsprechenden Vergebührungsoperationen auf den Konten der Beteiligten durchgeführt: Das Konto des Endkunden wird für die Benutzung mit einem Betrag X belastet, soweit es sich um gebührenpflichtige Software oder Inhalte handelt. Für kostenfreie Angebote ist X=0. Dem Konto des Anbieters wird dieser Betrag X gutgeschrieben, abzüglich einer Servicegebühr Y. Die Servicegebühr Y fällt für den Anbieter von Software und Inhalten an, da er für die in o.g. Schritten 3.) und 4.) beschriebene Transaktion den Endkundenkontroll- u. vergebührungsservice des Netzbetreibers in Anspruch genommen hat.
   Sollte der die Anforderung des Endkunden nach der Verwendung von Software und Inhalten durch den Server des Netzwerkbetreibers abgelehnt worden sein, so wird dies ebenfalls durch den in den Betriebsprotokollen des Servers geeignet festgehalten.

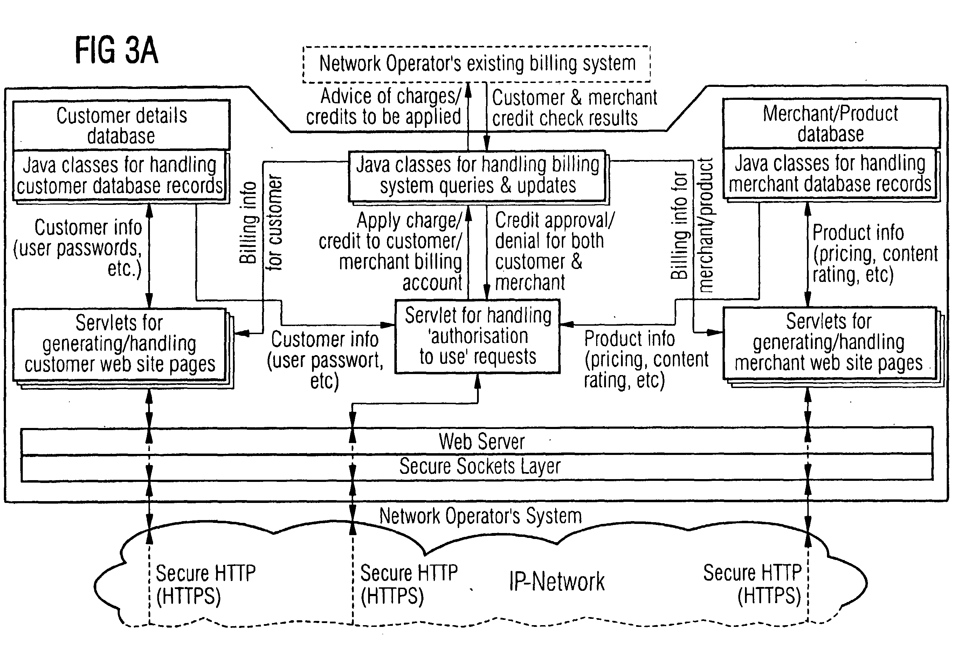

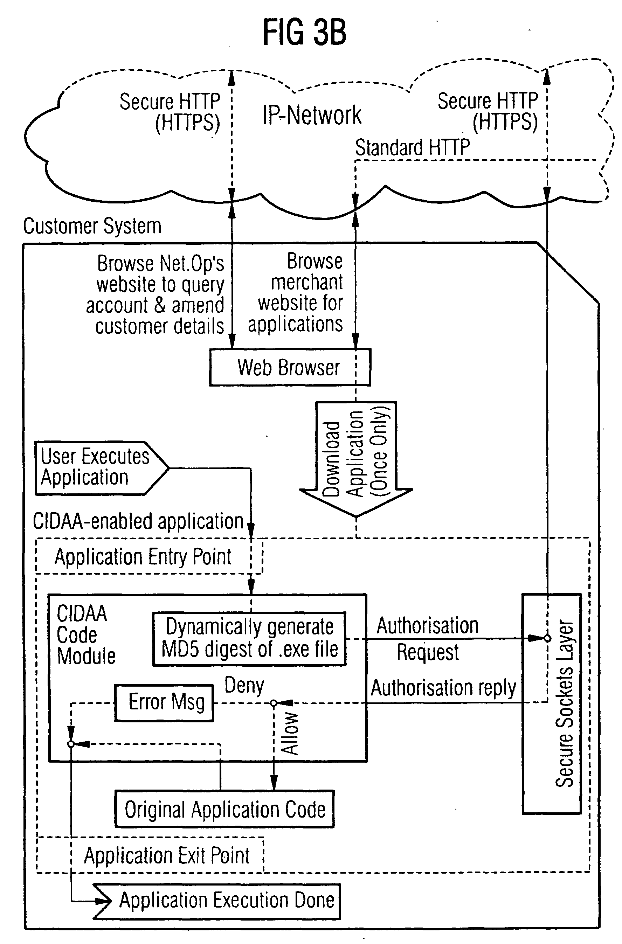

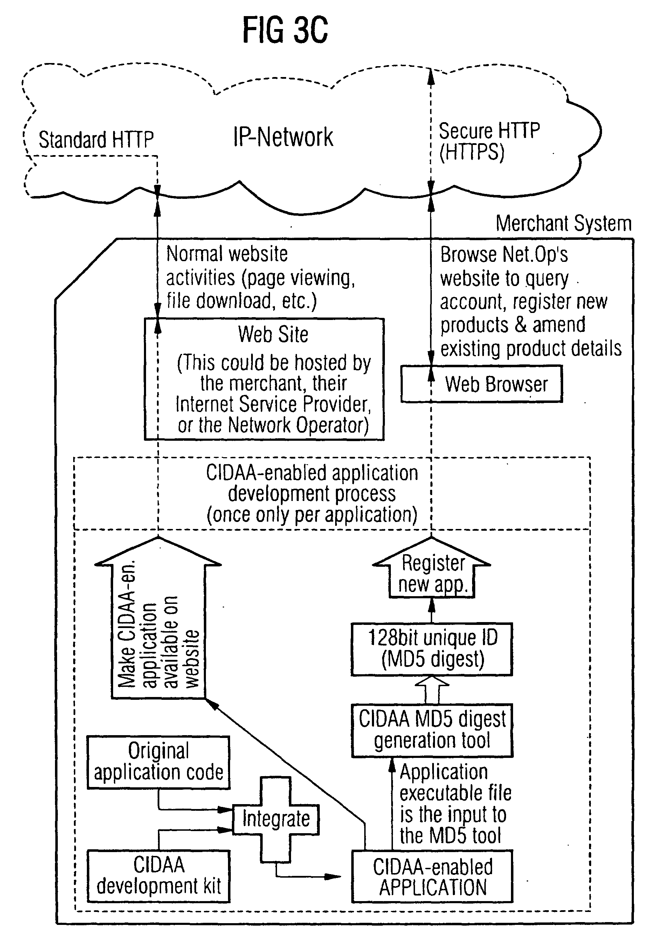

Fig. 3 zeigt die o.g. Schritte 3.) und 4.) zwischen Software und Inhalten mit Zugangskontroll- und Vergebührungsmodul auf Seiten des Endkunden und der Kontroll- und Vergebührungsinstanz auf Seiten des Netzwerkbetreibers in mehr Detail:
1. Unmittelbar nach Start der Software und Inhalte wird in den normalen Programmablauf das Zugangskontroll- und Vergebührungsmodul (CIDAA Module: Crypthographic ID Based Authorization and Accounting Module) eingeschoben. Dies geschieht durch Einbau des entsprechenden Software Development Kits in den original Source Code der Software und Inhalte.
2. Der CIDAA Request Generator des CIDAA Moduls setzt über das Netzwerk des Netzwerkbetreibers eine Anfrage zum Zweck der Zugangskontrolle und Vergebührung an den CIDAA Request Handler auf dem entsprechenden Server des Netzwerkbetreibers ab. In Richtung Netzwerkbetreiber werden dabei eine für die jeweilige Software und Inhalt spezifische krypthographische Kennung in Form eines sog. MD5 Digest übertragen, ebenso Kennung und Passwort des Endkunden, zu dessen Eingabe er vorher durch das CIDAA Modul aufgefordert wurde.
   Dabei ist MD5 eine spezielle Variante aus der allgemeinen Klasse der sog. Hash-Funktionen, die benutzt werden, um digitale Signaturen von digitalen Daten zwecks besserer Handhabung eineindeutig auf sog. Message-Digests zu verkürzen.
3. Der CIDAA Decision Maker berücksichtigt verschiedene Kriterien um zu entscheiden, ob der Anfrage durch den Endkunden die Software und Inhalte benutzen zu dürfen stattgegeben wird.
   Mögliche Kriterien sind dabei:
   - Korrekte und beim Netzwerkbetreiber registrierte krypthographische Kennung der Software und Inhalte
   - korrekte Autorisierung des Endkunden über Benutzerkennung und Passwort
   - Versionsnummer der Software und Inhalte (ist die Version evtl. veraltet?)
   - Art der zu benutzenden Software und Inhalte bezogen auf ein voreingestelltes Profil des Endkunden (z.B. Beschränkung auf bestimmte Inhalte bei Accounts von Minderjährigen,...)
   - Bonität und Kontostand des Endkunden.
4. Der CIDAA Reply Generator auf der Seite des Netzwerkbetreibers schickt die entsprechende Antwort auf die Anfrage aus Schritt 2.) an den CIDAA Reply Handler im CIDAA Modul auf Seiten des Endkunden.
5. Je nachdem ob die Anfrage positiv oder negativ beantwortet wurde, gibt das CIDAA Modul aus dem Reply Handler heraus die Kontrolle ab und es wird der original Programmablauf der Software und Inhalte fortgesetzt, bzw. vom CIDAA Modul eine entsprechende Fehlermeldung angezeigt.
6. Neben der Rückantwort an den CIDAA Reply Handler liefert der CIDAA Reply Generator auch noch Informationen für den Accounting Handler auf dem Server des Netzwerkbetreibers.
7. Der Accounting Handler führt die entsprechenden Vergebührungsoperationen auf den Konten des Endkunden und des Anbieters von Software und Inhalten durch. Außerdem führt der Accounting Handler auch eine Statistik über die erfolgten CIDAA Anfragen und das Ergebnis ihrer Bearbeitung.

### Vorteile der Lösung:

- Netzwerkbetreiber:
   Die Lösung ermöglicht dem Netzwerkbetreiber sein Geschäft über den reinen Bit-Transport hinaus in Richtung Mehrwertdienste zu erweitern.
   In Richtung Endkunden kann er spezielle Konten (Accounts) für Minderjährige und Kinder anbieten mit Kosten- und Zugangskontrolle zu bestimmter Software und Inhalten.
   In Richtung Anbieter kann er die In-casso Vergebührung von Leistungen übernehmen, die der Endkunde vom Anbieter bezogen hat. Dabei können auch Kleinstbeträge wirtschaftlich vergebührt werden, da der Netzwerkbetreiber im Rahmen seiner sonstigen Vergebührungstätigkeit für die Nutzung von Netzresourcen z.B. durch den Endkunden hierin bereits ausreichend Erfahrung hat.
- Anbieter von Software und Inhalten:
   Der Anbieter kann die Vergebührung von Software und Inhalten gegenüber dem Endkunden outsourcen und sich auf seine Kernkompetenz konzentrieren. Mit Pay-Per-Use und One-Time-Full-Buy werden dem Anbieter gegenüber dem derzeitigen Stand neue, netzgestützte Vergebührungsmodelle in öffentlichen Netzen eröffnet.
   Gleichzeitig ist die netzbasierte, zertifikatgestützte, zentrale Zugangskontrolle zur Nutzung von Software und Inhalten sicherer als die derzeitige Praxis der Kontrolle über lokale Ressourcen auf dem Gerät des Endkunden.
   Das Einfügen eines entsprechende Softwaremoduls in den ursprünglichen Source Code der Software und Inhalte durch den Anbieter stellt aus technischer Sicht und vom Aufwand her keinerlei Schwierigkeit dar.
- Endkunde:
   Der Endkunde erhält vom Netzwerkbetreiber einen speziell auf sein Anforderungsprofil zugeschnittenen Account zur Nutzung von Software und Inhalten (alters- und inhaltsbezogene Accounts, Kostenkontrolle z.B. über pre-payed Accounts,...).
   Für alle derart bezogenen Leistungen erhält er eine einzige Rechnung vom Netzwerkbetreiber, der einen ihm bekannten und vertrauten Dienstanbieter darstellt. Dadurch kann der Endkunde gleichzeitig Angebote verschiedener Anbieter nutzen, ohne mit jedem jeweile eine eigene Geschäftsbeziehung (u.U. für Kleinstbeträge) eingehen zu müssen.
   Im Pay-Per-Use Vergebührungsmodell kann der Endbenutzer jederzeit legal die aktuelle Version einer ansonsten evtl. selten benötigten Software und von Inhalten in wirtschaftlicher Art und Weise benutzen. Hierfür muß der nicht einmalig den vollen, u.U. sehr hohen Kaufbetrag aufwenden, sondern es wird pro Benutzung jeweils nur ein Kleinstbetrag fällig. Der Endkunde zahlt in diesem Vergebührungsmodell nur für die tatsächlich in Anspruch genommene Nutzung der Software und Inhalte.

### 4. Ausführungsbeispiele der Erfindung

Die Figuren 3-7 zeigen ein konkretes Ausführungsbeispiel der vorstehend erläuterten Erfindung zur Zugangskontrolle und Vergebührung von Software und Inhalten:
Fig. 3 zeigt das Gesamtsystem im Überblick.
Die Figuren 4-7 stellen jeweils die funktionalen Teilsysteme aus der Gesamtübersicht in Fig. 3 dar.
In den Figuren 3-7 entsprechen die Bezeichnungen Customer, Merchant, Network Operator jeweils den hier bislang benutzten deutschen Bezeichnungen Endkunde, Anbieter, Netzwerkbetreiber.

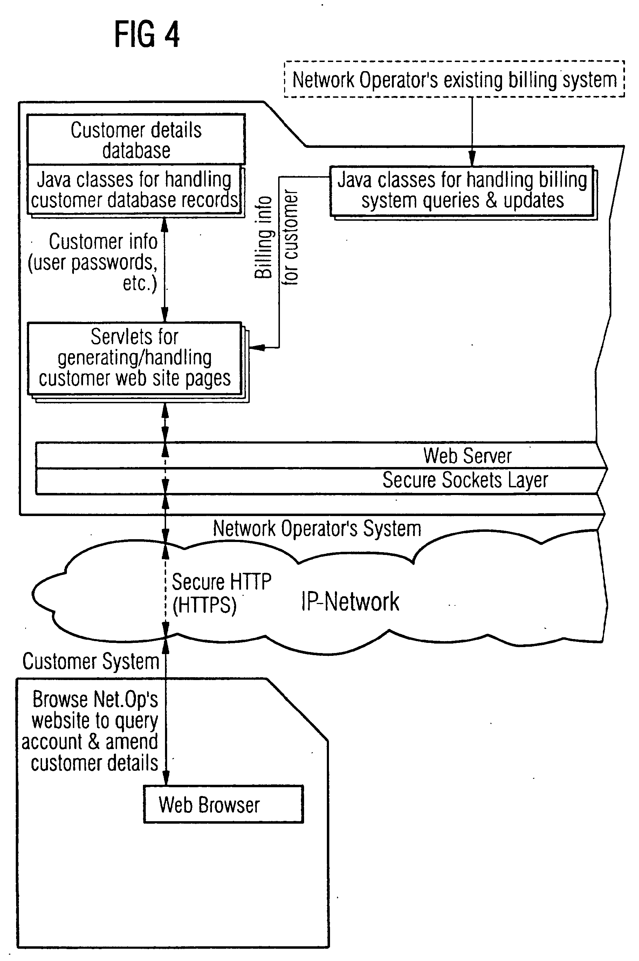

Fig. 4 zeigt eine Teilübersicht des Systems mit den wesentlichen Elementen für den Zugriff des Endkunden auf die Endkunden-Service-Website des Netzwerkbetreibers:

Der Endkunde kann dabei mittels eines Standard Webbrowsers seine aktuellen Account Daten (z.B. aktueller Gebührenstand) einsehen und Änderungen an seinem beim Netzwerkbetreiber in der Customer Details Database gespeicherten Benutzerprofil vornehmen (z.B. Änderung der Rechnungsanschrift).

Die Kommunikation zwischen Webbrowser des Endkunden und Webserver des Netzwerkbetreibers erfolgt via HTTP über Secure Socket Layer (SSL), also über Secure HTTP (HTTPS). Der Endkunden benötigt zum Zugriff auf o.g. Daten seine Benutzerkennung und Passwort.

Die entsprechende Service Logik auf Seiten des Webservers ist in Java Servlet Technologie realisiert. Verschiedene service-spezifische Java Servlets implementieren die jeweilige Service Logik. Sie bilden gleichzeitig die Schnittstelle zum Webbrowser als dem Service-Interface des Endkunden. Die Servlets generieren hierzu entsprechende Webseiten und übertragen diese zum Webbrowser des Endkunden via HTTPS bzw. reagieren auf Benutzeraktionen, die aus solchen generierten Webseiten heraus angestoßen werden.

Für die Service Logik notwendige Zugriffe auf Datenbanken und Vergebührungssysteme sind nicht in den verschiedenen Servlets selbst und damit mehrfach implementiert. Entsprechende Java Klassen realisieren einmalig die Anfragen und Änderungen in der Customer Details Database und dem externen (in der Regel schon existierenden) Vergebührungssystem des Netzwerkbetreibers.

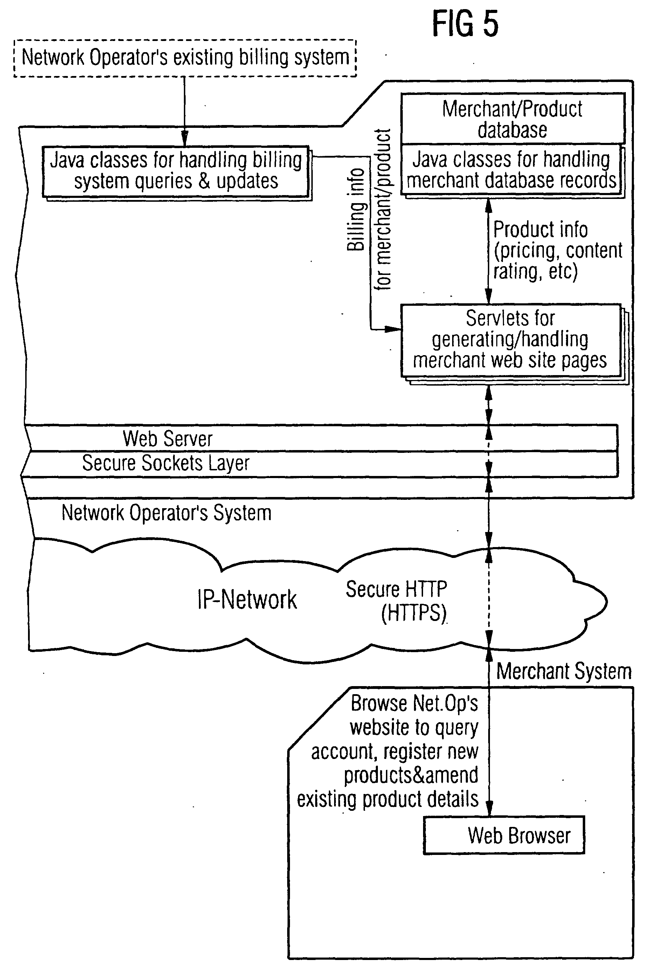

Fig. 5 zeigt eine Teilübersicht des Systems mit den wesentlichen Elementen für den Zugriff des Anbieters von Software und Inhalten auf die Anbieter-Service-Website des Netzwerkbetreibers:

Die technische Realisierung entspricht hier der des Zugriffs des Endkunden auf die Endkunden-Service-Website in Fig. 4.

Der Anbieter hat die Möglichkeit seinen aktuellen Account in der Merchant Database einzusehen (z.B. aktueller Guthabenstand) und zum Teil dort Änderungen vorzunehmen. Er kann weiterhin Änderungen in der Product Database vornehmen für die ihm gehörigen und nach der CIDAA-Methode vom Netzbetreiber für ihn kontrollierten und vergebührten Software und Inhalte: Änderungen bei der kryptographischen Kennung und Preis, Änderungen bzgl. des Content Ratings (z.B. Altersbeschränkung), etc.

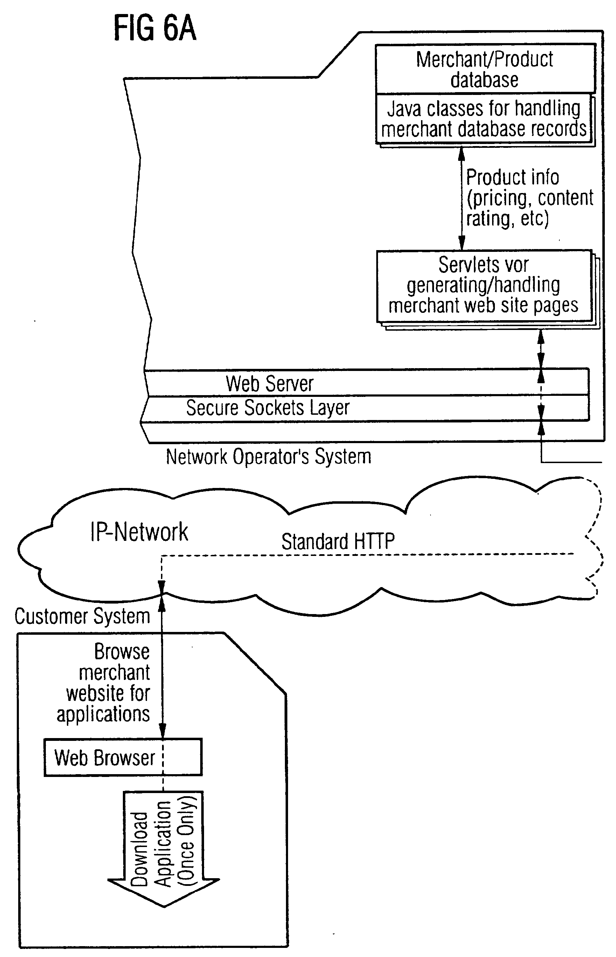

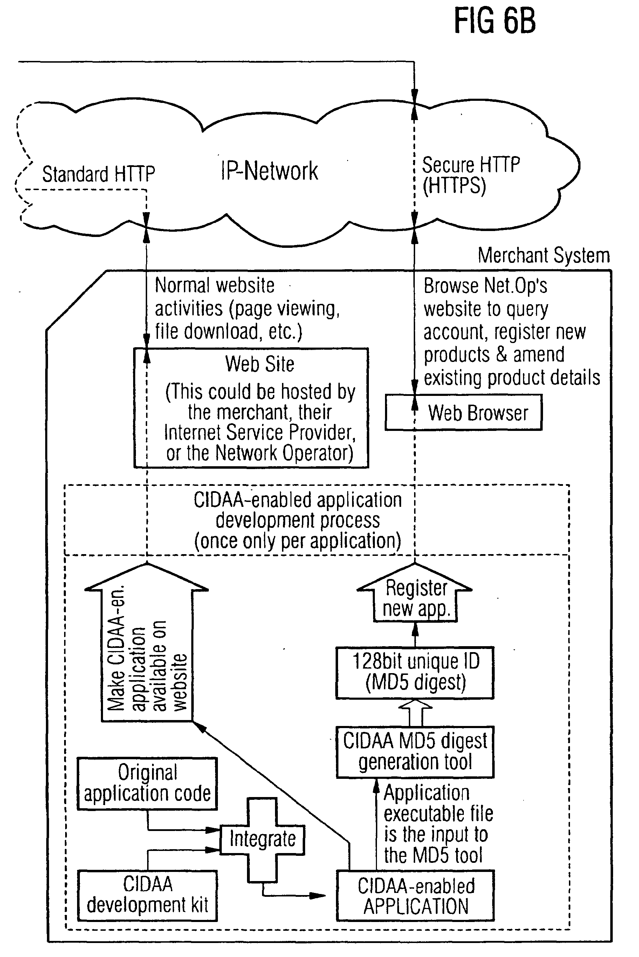

Fig. 6 zeigt eine Teilübersicht des Systems mit den wesentlichen Elementen für die Bereitstellung einer CIDAA-fähigen Software Applikation und Inhalte durch den Anbieter und den anschließenden Download durch den Endkunden auf sein Endgerät:

Dabei sind vom Anbieter für jede CIDAA-fähige und vom Netzwerkbetreiber verwaltete Software und Inhalte einmalig folgende Schritte durchzuführen:
- Integration des original Applikations Source Codes bzw. der Inhalte zusammen mit dem CIDAA Development Kit zu einem Executable File einer CIDAA-fähigen Software Applikation bzw. zu einem Self-Extracting Executable File für Inhalte. Der CIDAA Development Kit wird dem Anbieter von Software und Inhalten durch den Netzwerkbetreiber zur Verfügung gestellt, sobald sich der Anbieter für den Service "Netzwerkgestützte Zugangskontrolle und Vergebührung von Software und Inhalten" beim Netzwerkbetreiber subskribiert.
- Generierung einer eineindeutigen kryptographischen, 128bit langen, digitalen Kennung (128bit unique ID) mittels eines Generation Tools, das Teil des CIDAA Development Kits ist. Bei der erzeugten Kennung handelt es sich um ein MD5 Digest, die für verschiedene (Self-Extracting) Executable File eineindeutig ist.
- Bereitstellung der CIDAA-fähigen Software und Inhalte auf einem Website zum Download durch den Endkunden. Der Website kann entweder vom Anbieter selbst, vom Netzwerkbetreiber oder von Dritten (z.B. einem Internet Service Provider im Rahmen des Web Hostings) betrieben werden.
- Registrierung der neu erstellten, CIDAA-fähigen Software und Inhalte beim Netzwerkbetreiber, damit dieser die netzwerkgestützte Zugangskontrolle und Vergebührung hierfür übernehmen kann. Der Zugriff des Anbieters auf den Anbieter-Service-Website des Netzwerkbetreibers erfolgt wie bereits im Zusammenhang mit Fig. 5 beschrieben. Der Zugriff erfolgt über einen Webbrowser mittles HTTPS, die entsprechende Service Logik ist auf dem Server des Netzbetreibers über Java Serlets realisiert. Als Daten werden jeweils pro Software-Produkt z.B. Kennung (MD5 Digest) des SW-Produkts, Vergebührungsmodell, Preise, Content Rating, etc. vom Anbieter an den Netzwerkbetreiber zur Aufnahme in die Product Database übermittelt.

Nachdem der Anbieter die CIDAA-fähige Software und Inhalte erstellt, auf einer Website bereitgestellt, und beim Netzwerkbetreiber registriert hat, kann der Endkunde sich diese Software und Inhalte im Rahmen seiner normalen Aktivitäten beim Surfen auf einer Website (Betrachten von Seiten, Herunterladen von Software und Inhalten) auf sein Endgerät herunterladen. Das Herunterladen durch den Endkunden erfolgt über Standard HTTP mittels eines Standard Webbrowsers. Im Falle von Software installiert der Endkunde anschließend die Applikation in der üblichen Weise auf seinem Endgerät.

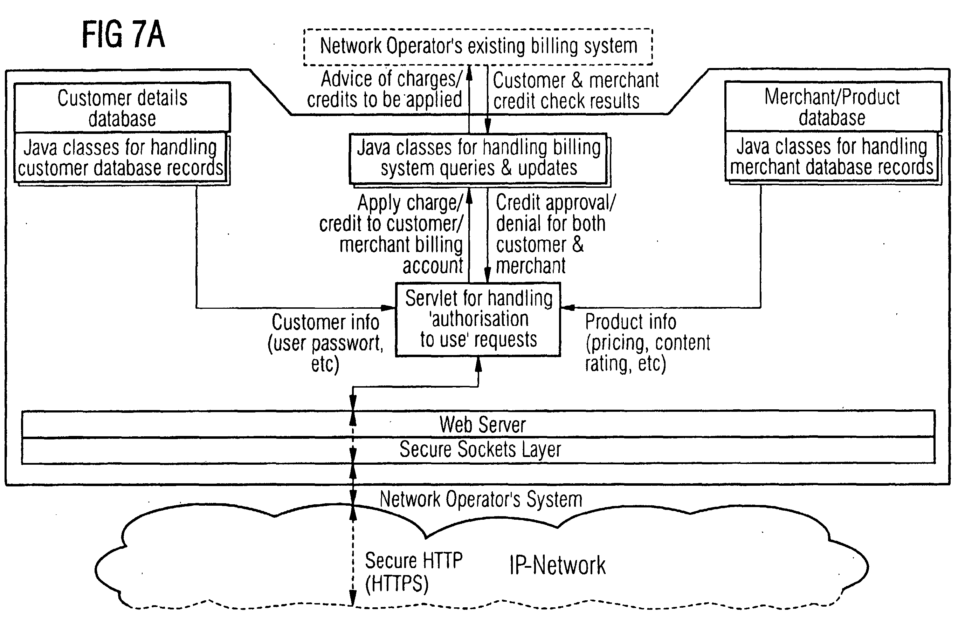

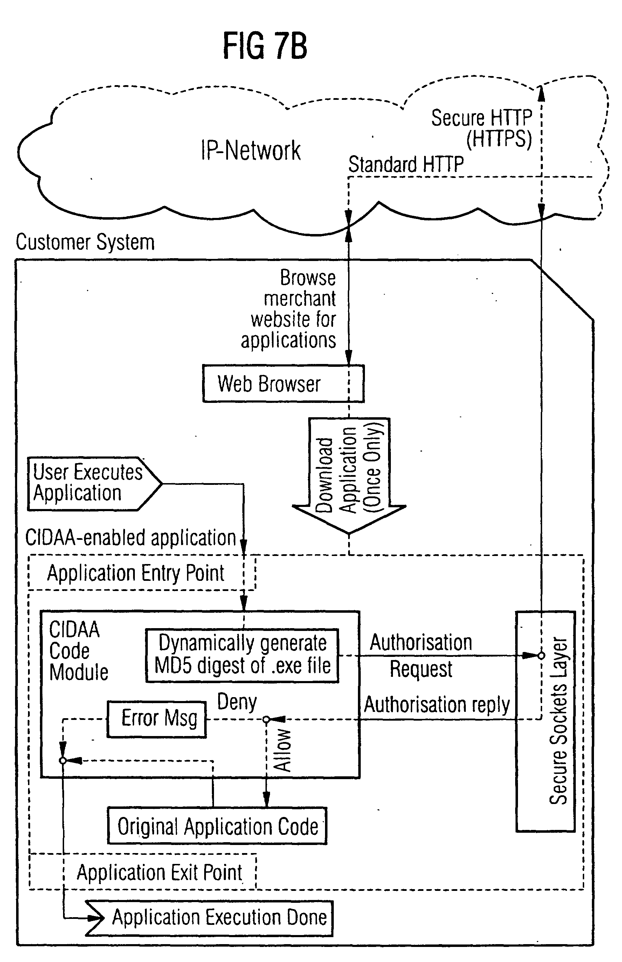

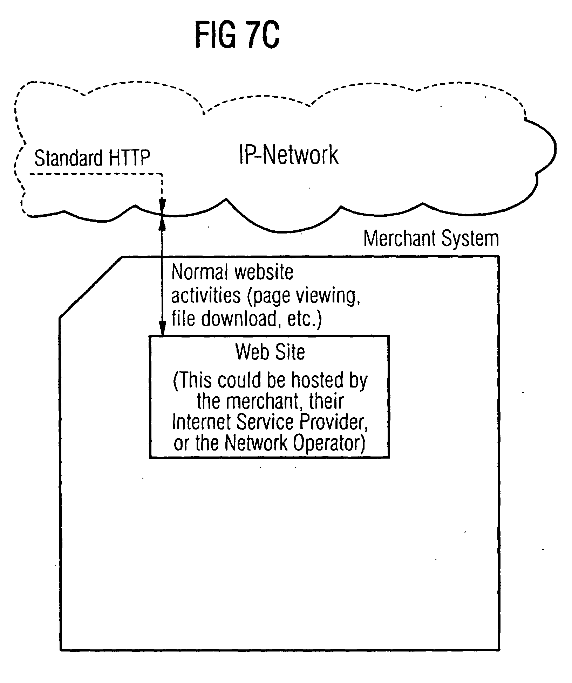

Fig. 7 zeigt eine Teilübersicht des Systems mit den wesentlichen Elementen für die Nutzung einer CIDAA-fähigen Software Applikation und Inhalte durch den Endkunden:

Herunterladen und ggf. Installation der Software und Inhalte durch den Endkunden auf seinem Endgerät wurden bereits im Zusammenhang mit Fig. 6 beschrieben.

Sobald der Endkunde auf seinem Endgerät das Executable File der Software Applikation bzw. das Self-Extracting Executable File im Falle von Inhalten ausführt, laufen folgende Schritte ab:
- Der normale Entry Point des (Self-Extracting) Executable File übergibt die Programmkontrolle an das CIDAA Code Module, das mittels des CIDAA Development Kits in den Source Code des (Self-Extracting) Executable File eingebaut wurde.
- Das CIDAA Code Module generiert dynamisch ein MD5 Digest des eigenen (Self-Extracting) Executable File. Die Generierung erfolgt dynamisch, um die Authentizität und Unversehrtheit der Software und Inhalte sicherzustellen. Dies wird erreicht, indem der dynamisch generierte MD5 Digest mit dem zuvor mittels Digest Generation Tool vom Anbieter statisch erstellten MD5 Digest (siehe Beschreibung von Fig. 6), der auf dem Server des Netzbetreibers abgelegt wurde, verglichen wird.
- Das CIDAAA Code Module schickt einen 'Authorization to Use' Request über HTTPS an den Webserver des Netzwerkbetreibers. Parameter des Requests sind der dynamisch generierte MD5 Digest sowie die dynamisch vor dem Absetzen des Request vom Endkunden abgefragte Benutzerkennung und Passwort (z.B. mittels Popup-Fenster).
- Auf dem Websever des Netzwerkbetreibers wird der 'Authorization to Use' Request von einem Servlet mit entsprechender Service Logik entgegengenommen und bearbeitet. Die dabei notwendigen Zugriffe auf Datenbasen und Vergebührungssystem werden über Java Klassen realisiert.
   Die einzelnen Bearbeitungsschritte sind:
   - Auslesen der Daten des Endkunden (Benutzerkennung, Passwort, Content Restrictions, etc.) aus der Customer Details Database und soweit möglich deren Vergleich mit den entsprechenden Parametern des 'Authorization to Use' Request. Abbruch und negative Antwort auf den 'Authorization to Use' Request zurück zum Endgerät des Endkunden, falls Benutzerkennung oder Passwort nicht übereinstimmen.
   - Auslesen der Daten zu dem SW-Produkt (vom Anbieter statisch generierter MD5 Digest, Vergebührungsmodell, Preise, Content Rating, etc.) aus der Merchant/Product Database und deren Vergleich mit den entsprechenden Parametern aus dem 'Authorization to Use' Request sowie den zuvor ausgelesenen Daten des Endkunden aus der Customer Details Database. Um Authentizität und Unversehrtheit der Software und Inhalte sicherzustellen werden hierbei inbesondere der statische, in der SW-Produkt Datenbank hinterlegte MD5 Digest und der beim Aufruf der Software und Inhalte im Gerät des Endbenutzers dynamisch generierte MD5 Digest verglichen.
      Abbruch und negative Antwort auf den 'Authorization to Use' Request zurück zum Endgerät des Endkunden, falls MD5 Digest, Vergebührungsmodell oder Content Rating nicht übereinstimmen.
   - Abhängig vom gültigen Vergebührungsmodell Anstoß einer entsprechenden Transaktion zur Gut-/Lastschrift auf den Account des Endkunden und/oder des Anbieters im Vergebührungssystem des Netzwerkbetreibers.
      Abbruch und negative Antwort auf den 'Authorization to Use' Request zurück zum Endgerät des Endkunden, falls hierbei Fehler auftreten.
   - Positive Antwort auf den 'Authorization to Use' Request zurück via HTTPS an das Endgerät des Endkunden, falls bis hierher im Ablauf der Service Logik keine Fehler auftreten sind.
- Das CIDAAA Code Module empfängt die Antwort auf den 'Authorization to Use' Request über HTTPS vom Webserver des Netzwerkbetreibers:
   - Bei positiver Antwort: Verzweigung zum original Programmablauf des (Self-Extracting) Executable File; damit wird dem Endkunden die berechtigte Nutzung der Software bzw. das Auspacken der Inhalte ermöglicht, falls die Zugangskontrolle und Vergebührung durch die zentrale Instanz des Netzwerkbetreibers erfolgreich war.
   - Bei negativer Antwort: Verzweigung zur Ausgabe einer entsprechenden Fehlermeldung an den Endkunden; damit wird die unberechtigte Nutzung der Software bzw. das Auspacken der Inhalte durch den Endkunden unterbunden, falls die Zugangskontrolle und Vergebührung durch die zentrale Instanz des Netzwerkbetreibers fehlgeschlagen ist.
- Verlassen und Beenden des (Self-Extracting) Executable File über den normalen Exit Point

## Patentansprüche

1. Verfahren zur Nutzung von SW-Produkten, die über ein Netz angeboten werden, demgemäß
a) aufgrund einer Anforderung eines Benutzers über ein Endgerät ein über einen Angebotsserver angebotenes SW-Produkt von dem Angebotsserver über das Netz auf das Endgerät des Benutzers heruntergeladen wird,
b) bei Aufruf des SW-Produkts im Endgerät des Benutzers ein SW-Komponente des SW-Produkts aktiviert wird, durch die eine Kommunikation mit einem Nutzungsbehandlungsserver bezüglich der Nutzung des SW-Produkts eröffnet wird, wobei dem Nutzungsbehandlungsserver von der SW-Komponente im Rahmen dieser Kommunikation Daten mitgeteilt werden, nach deren Maßgabe von dem Nutzungsbehandlungsserver überprüft wird, ob die Nutzung des SW-Produkts für den anfordernden Benutzer freigegeben wird und/oder Vergebührung-Operationen auf den Konten des Benutzers und des Anbieters des SW-Produkts durchgeführt werden.

2. Verfahren nach Anspruch 1,
**dadurch gekennzeichnet, daß**
der genannte Nutzungsbehandlungs-Server von dem Netz-Provider betrieben wird.

3. Verfahren nach einem der Ansprüche 1 oder 2
**dadurch gekennzeichnet, daß**
der genannte Angebotsserver von dem Netz Provider betrieben wird.

4. Verfahren nach einem der Ansprüche 1 bis 3,
**dadurch gekennzeichnet, daß**
es sich bei dem Angebotsserver und/oder dem Nutzungsbehandlungsserver um einen Web-Server handelt.

5. Nutzungsbehandlungsserver, der eine Nutzungsbehandlung für SW-Produkte, die von einem Netz heruntergeladen werden können, durchführt, wobei er, nachdem ein SW-Produkt in ein Endgerät eines Benutzers heruntergeladen und aktiviert worden ist, von dem SW-Produkt kontaktiert wird und ihm in diesem Rahmen die für die Durchführung der Nutzungsbehandlung erforderlichen Daten mitgeteilt werden.

6. Nutzungsbehandlungsserver nach Anspruch 5
**dadurch gekennzeichnet, daß**
er ein SW-Produkt registriert, indem er eine Kennung des SW-Produkts abspeichert sowie Daten, die die Art der Nutzungsbehandlung des SW-Produkts festlegen.

7. Nutzungsbehandlungsserver nach einem Ansprüche 5 oder 6,
**dadurch gekennzeichnet, daß**
es sich bei den erforderlichen Daten um die Kennung des SW-Produkts und des Benutzers handelt.

8. Nutzungsbehandlungsserver nach einem Ansprüche 5 bis 7,
**dadurch gekennzeichnet, daß**
eine Art der Nutzunggsbehandlung darin besteht, eine Zugangskontrolle durchzuführen.

9. Nutzungsbehandlungsserver nach einem Ansprüche 5 bis 8,
**dadurch gekennzeichnet, daß**
eine Art der Nutzunggsbehandlung darin besteht, eine Vergebührung der Nutzung des SW-Produkts auf den Konten des Benutzers und des Anbieters durchzuführen.

10. Nutzungsbehandlungsserver nach einem der Ansprüche 5 bis 9, **dadurch gekennzeichnet, daß**
er eine Statistik über die erfolgten Nutzungs-Kontaktierungen und das Ergebnis ihrer Bearbeitung führt.

11. SW-Produkt, das
über ein Netz auf Anforderung eines Benutzers in dessen Endgerät herunterladbar ist,
eine SW-Komponente enthält, die bei dem Aufruf des SW-Produkts im Endgerät aktiviert wird, daraufhin eine Kommunikation nit einem Nutzungsbehandlungsserver aufnimmt und diesem im Rahmen dieser Kommunikation Daten für die Durchführung der Nutzungsbehandlung mitteilt.

12. SW-Produkt nach Anspruch 11,
**dadurch gekennzeichnet, daß**
es sich bei den Daten um die Daten des SW-Produkt-Anbieters, der Kennung des SW-Produkts und dynamisch ermittelte Benutzer-Daten handelt.

13. SW-Produkt nach Anspruch 11 oder 12,
**dadurch gekennzeichnet, daß**
es Benutzer-Daten dynamisch ermittelt, indem es durch die genannte SW-Komponente in eine Interaktion mit dem Benutzer tritt.

14. Verfahren zum Erzeugen eines SW-Produkts, das über ein Netz angeboten wird,
demgemäß
in den Source Code des SW-Produkts eines SW-Herstellers mithilfe eines Software Development Kits, das von einem Nutzungsbehandlungs-Provider zur Verfügung gestellt wird, ein SW-Komponente eingebaut wird, die bei Aufruf des SW-Produkts aktiviert wird, wodurch eine Kommunikatiom mit einem Nutzungsbehandlungsserver aufgenommen wird und wodurch im Rahmen dieser Kommunikation dem Nutzungsbehandlungsserver für die Durchführung der Nutzungsbehandlung erforderliche Daten mitgeteilt werden.
